# EUROPEAN PATENT APPLICATION

(11) **EP 1 683 842 A1**
(43) Date of publication of application: **26.07.2006**
(21) Application number: 04792940.1
(22) Date of filing: 26.10.2004
(51) Int. Cl.: C09D 11/00, C08F 290/06, B01F 17/52

(54) **WATER BASE INK**

(30) Priority: 31.10.2003 JP 2003372143
(71) Applicant: Toagosei Co., Ltd, Minato-ku, Tokyo 105-8419 (JP)
(72) Inventor: HAYASHI, Katsuhiro, C/O TOAGOSEI CO., LTD.,, Nagoya-shi, Aichi 4550027 (JP); MORI, Yoshio, C/O TOAGOSEI CO., LTD.,, Nagoya-shi, Aichi 4550027 (JP)
(74) Representative: Pohlmann, Eckart
(86) International application number: PCT/JP2004/015812
(87) International publication number: WO 2005/042651

(57) **Abstract**

[Problem] To provide an aqueous ink comprising a dispersant comprising a graft copolymer with excellent dispersibility of a dispersoid such as a pigment in an aqueous medium and is capable of maintaining a dispersion state stably for a prolonged period.

[Means for solution] Aqueous ink comprising, as a dispersant, a graft copolymer having a weight average molecular weight of from 1, 000 to 100, 000 and comprising: a polymer having a weight average molecular weight of from 300 to 10, 000 represented by the following formula (1) or (2) as a side chain; and a polymer as a main chain comprising a hydrophobic monomer unit as an essential component, and, if necessary, other copolymerizable monomer unit as a constitutional component: 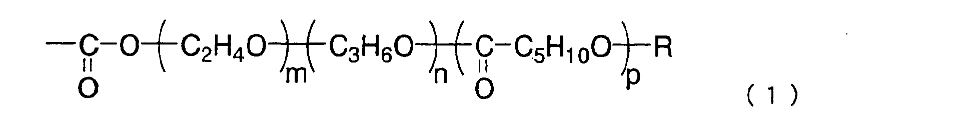 wherein the sum of m and n is 1 or more, p is 0 or 1 or more, and R is a chemical structural unit having an ionic functional group: 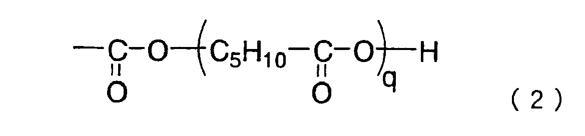 wherein q is 1 or more.

## Description

### [Technical Field]

The present invention relates to aqueous ink containing a dispersant that is low in dispersion viscosity and excellent in storage stability.

### [Background Art]

Dispersants comprising polymers are used for the purpose of well and stably dispersing each dispersoid for inorganic pigments such as calcium carbonate, titanium oxide, etc., for drilling mud, for cement, or for detergent builder. In aqueous inks for aqueous ballpoint pens and inkjet recording, the following polymers are used as dispersants for dispersing pigments, which are dispersoids, in aqueous media.

According to the dispersants for organic pigments, it is important for the polymers to have a function as a surfactant possessing both a hydrophobic region having affinity with dispersoids such as pigments and a hydrophilic region having affinity with aqueous media. As such dispersants, graft copolymers comprising a hydrophobic macromonomer containing an aromatic monomer such as styrene or alkyl (meth)acrylates as a constituting unit and a hydrophilic monomer, and graft copolymers comprising a hydrophilic macromonomer containing a monomer such as (meth)acrylic acid, or (meth)acrylic acid hydroxyalkyl ester and a hydrophobic monomer are known (refer to patent literature 1).

A pigment dispersant comprising a graft copolymer having a main chain containing a hydrophobic monomer and side chains derived from macromonomers that are more hydrophilic than the main chain connecting to the main chain (refer to patent literature 2), and a carbon black dispersant comprising a copolymer having a main chain containing a functional monomer having reactivity with carbon black by chelate bonding and coordination bonding and an aromatic monomer and side chains comprising polysiloxane, polyether, polyester and polyamide (refer to patent literatures 3 and 4), are also disclosed. In addition to the above, there are also disclosed a pigment dispersant having lactone or oxyacid condensed product or polyalkylene glycol as side chains (refer to patent literature 5), and an anionic polymer as a pigment dispersing assistant for offset printing ink, which is obtained by copolymerizing a monomer having an aromatic ring such as styrene and a monomer having a hydroxyl group such as hydroxyethyl methacrylate, and then adding acid anhydride to the hydroxyl group (refer to patent literature 6).

However, in the case of the aqueous inks prepared from the above graft copolymers, dispersibility of a colorant is not sufficient and, in particular, a dispersion state is liable to be broken by the environmental change such as temperatures. In addition, in the case of the pigment dispersants as described in patent literatures 1 and 2, in order to dissolve the copolymers in an aqueous medium, it is necessary to introduce a relatively large amount of ionic functional groups to the hydrophobic chains or lessen the hydrophobic components. Moreover, in the case of the graft copolymers having nonionic hydrophilic side chains as described in patent literatures 2 to 4, it is difficult to maintain dispersibility just after dispersion for a prolonged period, since electric repulsion among dispersed particles cannot be obtained.

[Patent Literature 1]
JP-A-6-100810 (pp. 3-5) (The term "JP-A" as used herein refers to an "unexamined published Japanese patent application".)
[Patent Literature 2]
JP-T-10-502097 (Claims) (The term "JP-T" as used herein refers to a "published Japanese translation of a PCT application".)
[Patent Literature 3]
JP-A-9-59331 (Claims)
[Patent Literature 4]
JP-A-9-272706 (Claims)
[Patent Literature 5]
JP-A-60-161464 (Claims)
[Patent Literature 6]
JP-A-11-12528 (Claims)

### [Disclosure of the Invention]

### [Problems that the Invention Is to Solve]

When a dispersoid such as a pigment is dispersed in an aqueous medium of a dispersion medium, the structural design of a polymer having a hydrophobic group and a hydrophilic group is important for obtaining excellent dispersibility. When the hydrophobic region of adsorbing moiety onto a dispersoid and a hydrophilic moiety giving solubility into a dispersion medium and electric repulsion of dispersoids are present too close from the structural point of view of a polymer, it becomes difficult to obtain good dispersibility in a dispersion medium, since they interfere with the other property or the hydrophilic region in a polymer is susceptible to the surface charge of a dispersoid. Therefore, it is necessary to make it difficult to be influenced from each other by the intervention of a spacer such as long chain aliphatic hydrocarbon between the adsorbing region onto a dispersoid and a region having affinity with a dispersion medium in a polymer.

The present invention has been done for the purpose of the improvement of the drawbacks of the prior art. That is, the object of the invention is to provide an aqueous ink containing a dispersant comprising a graft copolymer with excellent dispersibility of a dispersoid such as a pigment in an aqueous medium and capable of maintaining a dispersion state stably for a long period of time.

### [Means for Solving the Problems]

As a result of earnest discussion to solve the above problems, the present inventors have found that a dispersoid such as a pigment is excellent in dispersibility in an aqueous medium and a dispersion state can be maintained stably for a prolonged period by the use of the graft copolymer, as a dispersant, in which a side chain having ionic function only at a terminal in the side chain not bonding to the main chain is used as the side chain constituting the graft copolymer. Thus, the invention has been achieved.
Incidentally, an acrylic acid or a methacrylic acid is described as a (meth) acrylic acid, and acrylate or methacrylate as (meth)acrylate.

### [Advantage of the Invention]

A dispersant for use in the invention comprises a graft copolymer in which only the terminal in a side chain constituting the graft copolymer not bonding to a main chain has electric charge, so that the roles of adsorbing performance onto a dispersoid such as a pigment and the like and the affinity with a dispersion medium such as an aqueous medium can be assigned to the side chain and the main chain, as a result aqueous ink in which the functions of the main chain and the side chain do not interfere with each other and a dispersoid such as a pigment is stably dispersed can be obtained.

### [Best Mode for Carrying Out the Invention]

The aqueous ink in the invention is composed of a dispersant comprising the graft copolymer, a colorant and an aqueous medium.

### [1] Dispersant

A dispersant constituting aqueous ink in the invention comprises a graft copolymer having a weight average molecular weight of from 1,000 to 100,000 comprising, as a side chain, a polymer represented by the following formula (1) or (2) having a weight average molecular weight of from 300 to 10,000: 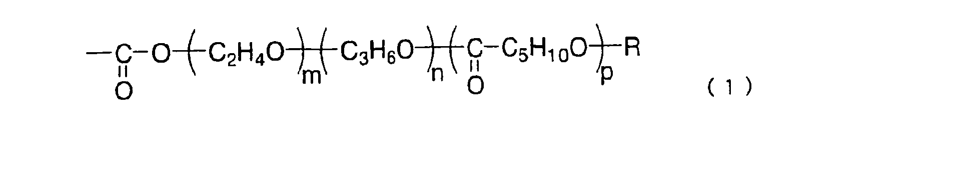 wherein the sum of m and n is 1 or more, p is 0 or 1 or more, and R is a chemical structural unit having an ionic functional group; 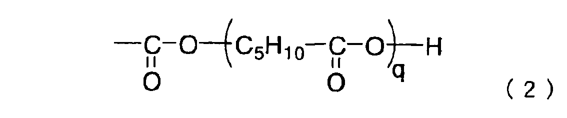 wherein q is 1 or more;
and as a main chain, a polymer comprising a hydrophobic monomer unit as the essential constituent, and if desired, other copolymerizable monomer unit as the constituent.

### <1> Side chain

The side chain polymer constituting the graft copolymer is represented by the following formula (1): 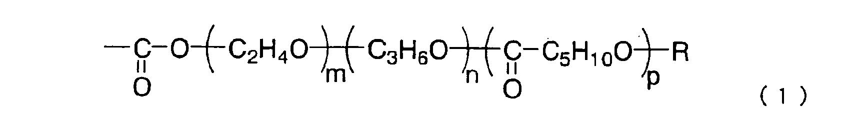 wherein the sum of m and n is 1 or more, p is 0 or 1 or more, and R is a chemical structural unit having an ionic functional group.
In formula (1), as the ionic functional group bonded to R, anionic functional groups, e.g., a carboxyl group, a sulfonic acid group, and a phosphoric acid group, and cationic functional groups, e.g., primary, secondary, and tertiary amino groups, and a quaternary ammonium salt group can be exemplified.

R in formula (1) represents a chemical structural unit comprising a chemical structure necessary to be bonded to a -(CO-C₅H₁₀O)- group in the side chain polymer and an ionic functional group. As the specific examples of the structures represented by R having a carboxyl group as the anionic functional group, ring-opened structures of dibasic acid anhydrides, e.g., cyclic acid anhydrides, such as succinic acid anhydride, phthalic acid anhydride, 4-cyclohexene-1,2-dicarboxylic acid anhydride, cis-1, 2-cyclohexanedicarboxylic acid anhydride, glutaric acid anhydride and trimellitic acid anhydride are exemplified.
As the cationic functional groups, amine structures and ammonium salt structures via the above carboxyl groups and/or an epoxy group are exemplified, as described later.

The side chain polymer constituting the graft copolymer is further represented by the following formula (2): 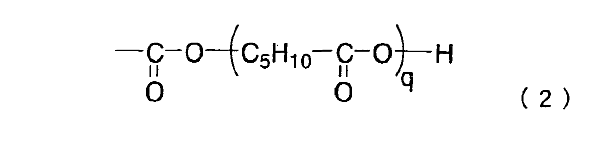 wherein q is 1 or more.
The side chain may be comprised of one kind alone, or two or more kinds of side chains may be used.

The weight average molecular weight of the side chain constituting the graft copolymer is from 300 to 1,000. When the weight average molecular weight is less than 300, the adsorption onto a dispersoid such as a pigment and the dispersion in an aqueous medium are not well balanced, since the electric charges of the main chain and side chain terminals are too close, as a result dispersion viscosity becomes too high and dispersibility with the lapse of time cannot be obtained. When it exceeds 10,000, electrostatic repulsion of side chain terminals weakens and dispersion stability with the passage of time worsens.

The chemical structure of the graft copolymer side chain represented by formula (1) or (2) are a polyalkylene oxide structure and/or a polyester structure. Specifically, polyethylene oxide, polypropylene oxide, poly(ethylene oxide/propylene oxide, a random type), a polyethylene oxide-polypropylene oxide (a block type), and a polylactone structure are exemplified.

As the synthesizing methods of the graft copolymer, a macromonomer method, an ionic polymerization method, a chain transfer method, and a method of making an active site with radiation and polymerizing a monomer have been conventionally known, but a macromonomer method is preferably used for the synthesis of the graft copolymer in the invention for the easiness of the introduction of an ionic functional group into side chain terminals, the facility of the adjustment of the polymerization degree of a main chain and a side chain, and the easiness of the linking of a main chain and a side chain.

A side chain having an ionic functional group only at one side terminal not containing to a main chain can also be manufactured by the macromonomer method with a macromonomer having a functional group at the ω-position (hereinafter referred to as an ω-position functional group-containing macromonomer) as a starting material.

As the specific examples of the ω-position functional group-containing macromonomers, ω-hydroxyl macromonomers, such as polyalkylene glycol mono(meth)acrylates, e.g., polyethylene glycol mono(meth)acrylates, polypropylene glycol mono(meth)acrylates, poly(ethylene glycol/propylene glycol) mono(meth)acrylates, and polyethylene glycol-polypropylene glycol mono(meth)acrylates; and polyester (meth)acrylates, e.g., polylactone (meth)acrylate are exemplified.
Besides the above, ω-carboxyl macromonomers obtained by a method of reacting (meth) acrylic acid with lactone and acid epoxide, and a method of reacting α,ω-dicarboxylic acid with an unsaturated monomer having a hydroxyl group are exemplified.

ω-Carboxyl macromonomers can be obtained by the addition of an ionic functional monomer by the reaction of ω-hydroxyl macromonomers with cyclic acid anhydride, such as succinic acid anhydride, phthalic acid anhydride, 4-cyclohexene-1,2-dicarboxylic acid anhydride, cis-1,2-cyclohexanedicarboxylic acid anhydride, glutaric acid anhydride, or trimellitic acid anhydride.
It is also possible to prepare a macromonomer having an anionic functional group at the ω-position by the addition of an ionic functional group, e.g., a sulfonic acid group and a phosphoric acid group, via the hydroxyl group of an ω-hydroxyl macromonomer.

Further, the ionic group of the above ω-position ionic group-containing macromonomer may be cationic. For example, macromonomers having a cationic functional group at the ω-position, e.g., ω-amino macromonomers and ω-ammonium macromonomers, can be obtained by the reaction of an ω-hydroxyl macromonomer and an ω-carboxyl macromonomer with epoxyamines or epoxy ammoniums.

As the epoxyamines, glycidyldimethylamine and glycidyldiethylamine are exemplified, and as the epoxy ammoniums, glycidyltrimethylammonium chloride and triethylglycidylammonium chloride are exemplified.

### <2> Main chain

The main chain constituting the graft copolymer is a polymer comprising a hydrophobic monomer unit as an essential component and, if necessary, other copolymerizable monomer units as constituents.

### (A) Hydrophobic monomer

As hydrophobic monomers for constituting the main chain of the graft copolymer, styrene-based monomers, aromatic group-containing monomers such as phenyl group-containing (meth) acrylates and phenyl group-containing maleimides, alkyl (meth)acrylates and the like are exemplified.

The specific examples of the styrene-based monomers include styrene, α-methylstyrene, p-methylstyrene, vinyltoluene and the like.
The specific examples of the phenyl group-containing (meth)acrylates include benzyl (meth)acrylate, phenyl (meth)acrylate, 2-hydroxy-3-phenoxypropyl (meth)acrylate, phenoxyethyl (meth)acrylate, phenoxypolyethylene glycol (meth)acrylate, nonylphenyl ethylene oxide adduct (meth)acrylate and the like.
The specific examples of the phenyl group-containing maleimides include N-phenylmaleimide, N-(2-chlorophenyl)-maleimide and the like.
The specific examples of the alkyl (meth)acrylates include methyl (meth)acrylate, ethyl (meth)acrylate, propyl (meth)acrylate, butyl (meth)acrylate, hexyl (meth)acrylate, cyclohexyl (meth)acrylate and the like.
These hydrophobic monomers may be used alone, or two or more monomers may be used in combination.

### (B) Other monomers

The main chain constituting the graft copolymer contains (A) hydrophobic monomer unit as an essential component, and can further contain, if necessary, other monomer units as constituents. As other monomer units, nonionic monomers other than (A) hydrophobic monomer unit, and ionic monomers having reverse ionicity to that of the dispersoids such as the later-described colorants and the like constituting aqueous inks are exemplified.

The specific examples of the nonionic monomers other than (A) hydrophilic monomers include hydroxyalkyl (meth) acrylates such as hydroxyethyl (meth) acrylate and hydroxypropyl (meth)-acrylate; (meth)acrylamide, vinyl acetate, N-vinylpyrrolidone, (meth)acrylonitrile, and the like. Crosslinking monomers such as methylenebisacrylamide, methylenebismethacrylamide, butanediol di (meth) acrylate, ethylene glycol di(meth)acrylate, polyethylene glycol di(meth)acrylate, polypropylene glycol di(meth)acrylate, trimethylolpropane tri(meth)acrylate, di(meth)acryloxyethyl phosphate, triallyl cyanurate, triallyl isocyanurate, divinylbenzene, diallyl maleate, polyallyl saccharose, etc., each having two or more vinyl groups in a molecule may further be contained.

As the ionic monomers having reverse ionicity to that of the dispersoids, anionic monomers and cationic monomers are exemplified, and as the anionic monomers, an unsaturated carboxylic acid monomer, an unsaturated sulfonic acid monomer, an unsaturated phosphoric acid monomer, etc., are exemplified.

The specific examples of the unsaturated carboxylic acid monomers include an acrylic acid, a methacrylic acid, a maleic acid, a fumaric acid, a crotonic acid, an itaconic acid, a citraconic acid, etc., and the anhydrides and salts thereof.
The specific examples of the unsaturated sulfonic acid monomers include styrenesulfonic acid, 2-acrylamido-2-methylpropanesulfonic acid, 3-sulfopropyl (meth)acrylate, bis(3-sulfopropyl) itaconate, sulfuric acid of 2-hydroxyethyl (meth)acrylic acid, and the salts thereof, etc.
The specific examples of the unsaturated phosphoric acid monomers include vinylphosphonic acid, bis(methacryloxyethyl) phosphate, diphenyl-2-acryloyloxyethyl phosphate, diphenyl-2-methacryloyloxyethyl phosphate, dibutyl-2-acryloyloxyethyl phosphate, dibutyl-2- methacryloyloxyethyl phosphate, etc.
These anionic monomers may be used by one kind alone, or two or more monomers may be used in combination.

As the cationic monomers, unsaturated tertiary amine-containing monomers and unsaturated ammonium salt-containing monomers are exemplified.

The specific examples of the unsaturated tertiary amine-containing monomers include monovinylpyridines, e.g., vinylpyridine, 2-methyl-5-vinylpyridine, and 2-ethyl-5-vinylpyridine; styrene having a dialkylamino group, e.g., N,N-dimethylaminostyrene and N,N-dimethylaminomethylstyrene; (meth)acrylates having a dialkylamino group, e.g., N,N-dimethylaminomethyl acrylate, N,N-dimethylaminoethyl acrylate, N,N-diethylaminomethyl acrylate, N,N-diethylaminoethyl acrylate, N,N-dimethylaminopropyl acrylate, and N,N-diethylaminopropyl acrylate; vinyl ethers having a dialkylamino group, e.g., 2-dimethylaminoethyl vinyl ether; (meth)acrylamides having a dialkylamino group, e.g., N-(N',N'-dimethylaminoethyl)acrylamide, N-(N',N'-dimethylaminoethyl)methacrylamide, N-(N',N'-diethylaminoethyl)-acrylamide, N-(N',N'-diethylaminoethyl)methacrylamide, N-(N',N'-dimethylaminopropyl)acrylamide, N-(N',N'-dimethylaminopropyl)methacrylamide, N-(N',N'-diethylaminopropyl)-acrylamide, N-(N',N'-diethylaminopropyl)methacrylamide, etc.

As the unsaturated ammonium salt-containing monomers, those obtained by the quaternarization of the unsaturated tertiary amine-containing monomers with quaternarization agents such as alkyl halides (alkyl group: C1 to C18, halogen atom: a chlorine atom, a bromine atom, or an iodine atom); benzyl halides such as benzyl chloride or benzyl bromide; esters of alkylsulfonic acids (alkyl group: C1 to C18) such as methanesulfonic acid; alkyl esters (alkyl group: C1 to C18) of arylsulfonic acids such as benzenesulfonic acid and toluenesulfonic acid; dialkyl sulfates (alkyl group: C1 to C4), and the like are exemplified. These cationic monomers may be used alone, or two or more monomers may be used in combination.
The above other monomers may be used alone, or two or more monomers may be used in combination.

It is preferred that the ratio of the content of the constituting side chain in the graft copolymer is from 30 to 99 mass%, and the ratio of the content of the main chain is from 70 to 1 mass%, more preferably the content ratio of the constituting side chain is from 50 to 95 mass%, and the content ratio of the main chain is from 50 to 5 mass%. When the ratio of the content of the main chain is less than 1 mass%, the adsorption onto a dispersoid such as a colorant is insufficient and the graft copolymer does not function as a dispersant, while when the content ratio of the main chain exceeds 70 mass%, crosslinking occurs among the particles of the dispersoid and sometimes the dispersoid is conversely agglomerated. Further, when the content ratio of the side chain constituting the graft copolymer is less than 30 mass%, a sufficient amount of side chains cannot be introduced and electric repulsion cannot be ensured, so that the graft copolymer does not function as a dispersant.

For the synthesis of the graft copolymer, a method of using a radical polymerization initiator is preferred for the easiness of polymerization operation and molecular weight control, and a solution polymerization method of performing polymerization in an organic solvent is more preferred, since hydrophobic monomers are hardly soluble in water.
Preferred solvents in performing radical polymerization by solution polymerization are ketone solvents, e.g., acetone, methyl ethyl ketone, and methyl isobutyl ketone; acetate solvents, e.g., ethyl acetate and butyl acetate; aromatic hydrocarbon solvents, e.g., benzene, toluene, and xylene; isopropanol, ethanol, cyclohexane, tetrahydrofuran, dimethylformamide, dimethyl sulfoxide, hexamethylphosphoramide, etc. More preferred solvents are ketone solvents, acetate solvents, and alcohol solvents.

As the radical polymerization initiators, any ordinarily used radical polymerization initiators can be used, and specifically ammonium persulfate, sodium persulfate, potassium persulfate, peroxy ketal, hydroperoxide, dialkyl peroxide, diacyl peroxide, peroxy dicarbonate, peroxy ester, cyano-based azobisisobutyronitrile, azobis(2-methylbutyronitrile), azobis (2-amidinopropane) hydrochloride, non-cyano-based dimethyl-2,2'-azobisisobutyrate, etc., are exemplified. Organic peroxides and azo compounds capable of easily controlling molecular weight and having low decomposition temperatures are preferred, and especially, azo compounds are more preferred.
The use amount of the polymerization initiators is preferably from 1 to 15 mass% based on the total mass of the polymerizable monomers, and more preferably from 5 to 10 mass%.

For controlling the molecular weight of the graft copolymer, an appropriate amount of a chain transfer agent, e.g., mercaptoacetic acid, mercaptopropionic acid, 2-propanethiol, 2-mercaptoethanol, thiophenol, dodecyl mercaptan, or thioglycerol may be added to the polymerization.

The preferred polymerization temperature is from 50 to 150°C, more preferably from 60 to 100°C. The preferred time of polymerization is from 5 to 25 hours. The molecular weight of the graft copolymer of the invention is preferably from 1, 000 to 100,000 as weight average molecular weight in the gel permeation chromatography with polystyrene as a standard substance, and is more preferably from 1, 000 to 50,000 in view of capable of obtaining proper dispersibility and proper solution viscosity. A polymer having a weight average molecular weight of less than 1,000 results in an insufficient dispersion effect, while when the weight average molecular weight exceeds 100,000, the viscosity increases to result in non-dissolution and bulk substances occur, so that the copolymer does not function as a dispersant.

The necessary amount of ionic groups in the graft copolymer is preferably from 50 to 300 mg-KOH/g in terms of an acid value in the case of anionic groups, and more preferably from 80 to 250 mg-KOH/g. When the acid value of the copolymer is less than 50 mg-KOH/g, the copolymer cannot obtain sufficient electrostatic repulsion, so that the dispersion stability with the lapse of time cannot be obtained, and when the acid value exceeds 300 mg-KOH/g, the hydrophilicity of the copolymer itself becomes great and the effect as a surfactant lessens, so that the copolymer does not function as a dispersant.

Further, it is necessary that these anionic groups are partially or entirely ionized by the neutralization with a base. As the bases for use in the neutralization, inorganic alkali agents of alkali metallic hydroxides, e.g., potassium hydroxide, sodium hydroxide, and the like, and organic amines, e.g., diethanolamine, triethanolamine, and the like are exemplified.

### [2] Aqueous ink

The aqueous ink of the invention contains a colorant and an aqueous medium as essential components in addition to the dispersant described in the above item [1].

The colorants for use in the aqueous ink of the invention are either of dyes and pigments insoluble in aqueous solvents.
Dyes are classified into water-soluble dyes and hydrophobic dyes, and hydrophobic dyes are preferred from the viewpoint of water resistance. Thus, as the colorants, hydrophobic dyes or pigments insoluble in aqueous solvents are preferred, and pigments are more preferred in view of weather resistance.

As hydrophobic dyes, oil dyes, disperse dyes, and the like are exemplified. They can be preferably used both in a water dispersion of polymer particles obtained by the incorporation into polymer particles and in an aqueous dispersion dispersed in water with a dispersant. The specific examples of the oil dyes include C.I. solvent Black, C.I. solvent Yellow, C.I. solvent Red, C.I. solvent Violet, C.I. solvent Blue, C.I. solvent Green, C.I. solvent Orange, etc. As the disperse dyes, C.I. dispersion Yellow, C.I. dispersion Orange, C.I. dispersion Red, C.I. dispersion Violet, C.I. dispersion Green, etc., can be exemplified.

The pigments may be any of inorganic pigments and organic pigments. They can be used alone or in combination, according to necessity.

The range of the dispersed particle size of the pigments is preferably from 0.005 to 15 µm, more preferably from 0.05 to 5 µm, and most preferably from 0.01 to 1 µm. When the dispersed particle size is 0.005 µm or less, a more amount of a dispersant is required for stabilizing dispersion, so that the performance of the pigments themselves cannot be exhibited, and when the dispersed particle size is 15 µm or more, it is difficult to maintain a stable dispersion state.

As the inorganic pigments, carbon black, metallic oxides, e.g., titanium oxide, metallic sulfides, metallic chlorides, etc., can be exemplified. Of these inorganic pigments, especially in black aqueous inks, carbon black is preferred.

As carbon blacks, furnace black, thermal lamp black, acetylene black, channel black, etc., can be exemplified. Specifically, No. 2300, No. 900, MCF88, No. 33, No. 40, No. 45, No. 52, MA7, MA8, No. 2200B (all manufactured by Mitsubishi Chemical Corporation), RAVEN1255 (manufactured by Columbia), REGAL400R, REGAL330R, REGAL660R, MOGUL L (all manufactured by Cabot), Color Black FW1, Color Black FW18, Color Black S160, Color Black S170, Color Black S150, Color Black FW200, Color Black FW2, Color Black FW2V, Printex 35, Printex 75, Printex L6, Printex 95, Printex U (all manufactured by Degussa), and the like are exemplified.

As the organic pigments, azo pigments, diazo pigments, phthalocyanine pigments, quinacridone pigments, isoindolinone pigments, dioxazine pigments, perylene pigments, perynone pigments, thioindigo pigments, anthraquinone pigments, quinophthalone pigments, etc., are exemplified.

The specific examples of the organic pigments include yellow pigments, e.g., C.I. Pigment Yellow 1, C.I. Pigment Yellow 2, C.I. Pigment Yellow 3, C.I. Pigment Yellow 13, C.I. Pigment Yellow 16, C.I. Pigment Yellow 74, C.I. Pigment Yellow 83, C.I. Pigment Yellow 128, etc., magenta pigments, e.g., C.I. Pigment Red 5, C.I. Pigment Red 7, C.I. Pigment Red 12, C.I. Pigment Red 48 (Ca), C.I. Pigment Red 48 (Mn), C.I. Pigment Red 57 (Ca), C.I. Pigment Red 112, C.I. Pigment Red 122, etc., and cyan pigments, e.g., C.I. Pigment Blue 1, C.I. Pigment Blue 2, C.I. Pigment Blue 3, C.I. Pigment Blue 15:3, C.I. Pigment Blue 16, C.I. Pigment Blue 22, C.I. Vat Blue 4, C.I. Vat Blue 6, etc.

As the aqueous medium, a mixed solvent comprising water and a water-soluble organic solvent is preferred. Water is preferably ion exchange water (deionized water). As the water-soluble organic solvents, alkyl alcohols having from 1 to 4 carbon atoms, e.g., methyl alcohol, ethyl alcohol, n-propyl alcohol, isopropyl alcohol, n-butyl alcohol, sec-butyl alcohol, tert-butyl alcohol, etc.; amides, e.g., dimethylformamide, dimethylacetamides, etc.; ketones or keto-alcohols, e.g., acetone and diacetone alcohol, etc.; ethers, e.g., tetrahydrofuran, dioxane, etc.; polyalkylene glycols, e.g., polyethylene glycol, polypropylene glycol, etc. ; alkylene glycols wherein the alkylene group contains from 2 to 6 carbon atoms, e.g., ethylene glycol, propylene glycol, butylene glycol, triethylene glycol, 1,2-hexanediol, 1,2,6-hexanetriol, thiodiglycol, hexylene glycol, diethylene glycol, etc.; glycerol; lower alkyl ethers of polyhydric alcohols, e.g., ethylene glycol monomethyl (or ethyl) ether, diethylene glycol methyl (or ethyl) ether, triethylene glycol monomethyl (or ethyl) ether, etc.; N-methyl-2-pyrrolidone, 2-pyrrolidone, 1,3-dimethyl-2-imidazolidinone, etc., are exemplified. Of these water-soluble organic solvents, polyhydric alcohols, e.g., diethylene glycol, etc. and lower alkyl ethers of polyhydric alcohols, e.g., triethylene glycol monomethyl (or butyl) ether are preferred.
Incidentally, these water-soluble organic solvents can be used alone or in combination of two or more, if necessary.

Conventionally known various additives that are usually added to aqueous inks may be added to the aqueous ink of the invention as other components besides the above dispersant, colorant, and aqueous medium. As such additives, a surfactant, a defoaming agent, an antiseptic, a precipitation inhibitor, a chelating agent, a thickener, an anticorrosive, an antioxidant, and the like are exemplified. As the surfactants, anionic surfactants, e.g., fatty acid salts, higher alcohol sulfates, liquid fatty oil sulfates, alkylaryl sulfonates, etc., nonionic surfactants, e.g., polyoxyethylene alkyl ethers, polyoxyethylene alkyl esters, polyoxyethylene sorbitan alkyl esters, acetylene alcohols, acetylene glycols, etc., cationic surfactants, e.g., alkylamines, quaternary ammonium salts, etc., and ampholytic surfactants, e.g., alkylbetaine, alkylamine oxide, etc., are exemplified.

The amount of the dispersants contained in the aqueous ink of the invention is preferably from 0.1 to 30 mass% based on the total mass of the ink, and more preferably from 1 to 15 mass%. The amount of the colorants contained in the aqueous ink is preferably from 0.1 to 30 mass%, and more preferably from 1 to 15 mass%.
The ratio of the dispersant to the colorant contained in the aqueous ink of the invention is preferably from 1:1 to 1:30 (ratio by mass), and more preferably from 1:2 to 1:15.

The amount of the water-soluble organic solvent contained in the aqueous ink is preferably in the range of from 3 to 50 mass% based on the total mass of the aqueous ink, and more preferably in the range of from 3 to 40 mass%. Further, the amount of water contained in the aqueous ink of the invention is preferably in the range of from 10 to 90 mass%, and more preferably in the range of from 30 to 80 mass%.

Further, the pH of the aqueous ink is preferably in the range of from 5 to 10. By controlling the pH to this range, the solubility of the dispersant comprising the above graft copolymer can be improved and the preservation stability thereof can be enhanced. Additionally, the corrosion of the members of an apparatus (e.g., an inkjet recording apparatus) to which the aqueous ink is applied can be restrained.

For controlling the pH of the aqueous ink, inorganic alkali agents such as alkali metal hydroxides, e.g., sodium hydroxide and potassium hydroxide, organic amines, e.g., diethanolamine and triethanolamine, organic acids, e.g., citric acid and tartaric acid, mineral acids, e.g., hydrochloric acid and phosphoric acid can be used as pH controlling agents.

The aqueous ink according to the invention is obtained by the mixture and dispersion of each of the above components. The above components can be used in aqueous inks for inkjet recording and aqueous inks for writing tools such as aqueous ball point pens and marker pens by diluting the components with an aqueous medium with or without adding a drying inhibitor and other additives, according to necessity. In this case, in order to prevent an inkjet nozzle or a pen tip from clogging by drying, it is preferred to add a low volatile or nonvolatile solvent of the above water-soluble organic solvents. Further, in order to enhance permeation into a recording medium, it is preferred that a volatile solvent is added. In particular, in the case where the ink is used in aqueous inks for inkjet recording, it is also preferred that a surfactant is added in order to impart appropriate surface tension to the ink.

As the dispersing machine for use in the dispersion, a ball mill, a roll mill, a sand mill, and the like are exemplified. Of these, a high speed sand mill is preferred, and the examples of dispersing machines include Super Mill, Sand Grinder, Bead Mill, Agitator Mill, Grain Mill, Dyno-Mill, Pearl Mill, Co Ball Mill (all of these are trade names), etc.

The advantages according to the invention are described below.
According to the dispersant of the invention, a colorant, such as a pigment that is a dispersoid can be stably dispersed in an aqueous medium. This is presumed due to the fact that the roles of adsorbing performance onto a pigment and the affinity with a dispersion medium can be assigned to the side chain and the main chain, and each performance can be exhibited at its maximum without interfering with each other.

### EXAMPLE

The invention will be described more specifically with reference to Examples and Comparative Examples. In the examples "%" and "parts" respectively mean "mass%" and "mass parts" unless otherwise indicated.

### EXAMPLE 1

### <Synthesis of macromonomer>

A glass flask equipped with a stirrer, an air suction tube and a thermometer was charged with 100 g (0.36 mol equivalent) of polyethylene glycol monomethacrylate (trade name: Blenmer PE200, manufactured by Nippon Oils and Fats Co., Ltd.), and 36 g (0.36 mol) of succinic acid anhydride. With bubbling the air and maintaining the inner temperature of the reaction vessel at 100°C, the mixture was subjected to reaction for 5 hours, whereby macromonomer 1 having a carboxyl group at the w-position, a polyethylene oxide skeleton, and α, β-ethylenic unsaturated double bond was obtained. When the molecular weight of the copolymer was measured by a GPC method with tetrahydrofuran as an eluent, the weight average molecular weight (hereinafter abbreviated to Mw) was found to be 550 in terms of polystyrene.
Incidentally, Blenmer PE200 is a registered trademark of Nippon Oils and Fats Co., Ltd.

### <Synthesis of copolymer>

Subsequently, a glass flask equipped with a stirrer, a dropping funnel, a reflux condenser, a nitrogen gas suction tube, and a thermometer was charged with 80 g of the above macromonomer 1, 20 g of styrene, and 400 g of methyl ethyl ketone. Under a nitrogen current, while maintaining the inner temperature of the reaction vessel at 78°C, 9 g of azobisisobutyronitrile (AIBN) was added thereto, followed by polymerization for 7 hours, whereby a methyl ethyl ketone solution of a copolymer (solids content: 20%) was obtained. Subsequently, potassium hydroxide equimolar to the carboxyl group contained in the copolymer and ion exchange water were added to the above methyl ethyl ketone solution of the copolymer to neutralize the solution. The methyl ethyl ketone was distilled off under reduced pressure to effect solvent removal, whereby an aqueous solution of copolymer 1 (Mw: 7, 600) (solids content: 20%) was obtained.

### <Preparation of aqueous ink>

After 15 parts of the above aqueous solution of copolymer 1 (solids content: 20%), 15 parts of carbon black (FW-18, manufactured by Degussa), and 70 parts of ion exchange water were mixed and premixing was carried out for 10 minutes, dispersion treatment was performed on the following conditions.
Dispersing machine: Sand Grinder (manufactured by Igarashi Kikai)
Pulverization medium: zirconium beads (diameter of beads: 0.3 mm)
Packing rate of the pulverization medium: 50% (by volume) Pulverization time: 3 hours
After the above dispersion treatment, centrifugation treatment (12,000 rpm, 20 minutes) was carried out to remove coarse particles and 40 parts of the resulting dispersion was mixed with 5 parts of glycerol, 15 parts of diethylene glycol, 2 parts of 2-pyrrolidone, and 38 parts of ion exchange water. The pH of the mixture was then controlled to 8 to 10 with diethanolamine, and the resulting mixture was filtrated through a membrane filter having a pore diameter of 5.0 µm to thereby obtain objective aqueous ink 1.

### EXAMPLE 2

Macromonomer 2 (Mw: 600) having a carboxyl group at the ω-position, a polycaprolactone skeleton, and an α, β-ethylenic unsaturated double bond was obtained in the same manner as in Example 1, except for changing the starting materials to 100 g (0.40 mol equivalent) of polycaprolactone-modified monomethacrylate (trade name: Praxel FM1, manufactured by Daicel Chemical Industries), and 40 g (0.40 mol) of succinic acid anhydride.
Incidentally, Praxel FM1 is a registered trademark of Daicel Chemical Industries.
After that, an aqueous solution of copolymer 2 (Mw: 8,000) was obtained in the same manner as in Example 1, except for changing macromonomer 1 used in the synthesis of the copolymer in Example 1 to macromonomer 2. Further, aqueous ink 2 was obtained according to the same procedure as in Example 1.

### EXAMPLE 3

A glass flask equipped with a stirrer, a dropping funnel, a reflux condenser, and a thermometer was charged with 14 parts of acrylic acid, 8 parts of p-toluenesulfonic acid monohydrate, and 0.08 parts of hydroquinone monomethyl ether as a polymerization inhibitor. While maintaining the inner temperature of the reaction vessel at 80°C, 114 parts of ε-caprolactone was dripped over 4 hours. After completion of dripping, the reaction was continued for further 2 hours at the same temperature, whereby macromonomer 3 (Mw: 400) having a carboxyl group at the ω-position, a polycaprolactone skeleton, and an α,β-unsaturated double bond was obtained.
After that, an aqueous solution of copolymer 3 (Mw: 7, 500) was obtained in the same manner as in Example 1, except for changing macromonomer 1 used in the synthesis of the copolymer in Example 1 to macromonomer 3. Further, aqueous ink 3 was obtained according to the same procedure as in Example 1.

### EXAMPLE 4

In Example 1, macromonomer 1 used in the synthesis of the copolymer was changed to 80 g (about 0.29 mol equivalent) of polyethylene glycol monomethacrylate (trade name: Blenmer PE200, manufactured by Nippon Oils and Fats Co., Ltd.), and a glass flask equipped with a stirrer, a dropping funnel, a reflux condenser, a nitrogen gas suction tube, and a thermometer was charged with 20 g of styrene, and 400 g of methyl ethyl ketone. Under a nitrogen current, while maintaining the inner temperature of the reaction vessel at 78°C, 9 g of azobisisobutyronitrile (AIBN) was added thereto, followed by polymerization for 7 hours, whereby a methyl ethyl ketone solution of a copolymer was obtained. After that, 28 g (0.28 mol) of succinic acid anhydride was added thereto while maintaining the temperature in the reaction vessel at 78°C, followed by reaction for 15 hours, whereby a methyl ethyl ketone solution of copolymer 4 (Mw: 9, 500) was obtained. Aqueous ink 4 was obtained in the same manner as in Example 1, except for changing the neutralization base in the carboxyl group from potassium hydroxide to triethanolamine.

### COMPARATIVE EXAMPLE 1

In Example 1, macromonomer 1 used in the synthesis of the copolymer was changed to 80 g of polyethylene glycol monomethacrylate (trade name: Blenmer PE200, manufactured by Nippon Oils and Fats Co., Ltd.), and a glass flask equipped with a stirrer, a dropping funnel, a reflux condenser, a nitrogen gas suction tube, and a thermometer was charged with 20 g of styrene, and 400 g of methyl ethyl ketone. Under a nitrogen current, while maintaining the inner temperature of the reaction vessel at 78°C, 9 g of azobisisobutyronitrile (AIBN) was added thereto, followed by polymerization for 7 hours, whereby a methyl ethyl ketone solution of a copolymer was obtained. Subsequently, ion exchange water was added to the above methyl ethyl ketone solution of the copolymer. The methyl ethyl ketone was distilled off under reduced pressure to effect solvent removal, whereby an aqueous solution of copolymer 5 (Mw: 9,000) was obtained. Further, aqueous ink 5 was obtained according to the same procedure as in Example 1.

### COMPARATIVE EXAMPLE 2

A methyl ethyl ketone solution of copolymer 6 (Mw: 9, 000) was obtained according to the same procedure as in Example 1, except for using 80 g of polycaprolactone-modified monomethacrylate (trade name: Praxel FM1, manufactured by Daicel Chemical Industries) in place of macromonomer 1 used in the synthesis of the copolymer in Example 1. However, the copolymer could not be soluble.

### COMPARATIVE EXAMPLE 3

An aqueous solution of copolymer 7 (Mw: 8,500) was obtained according to the same procedure as in Example 1, except for using 80 g of methacrylic acid in place of macromonomer 1 used in the synthesis of the copolymer in Example 1. Further, aqueous ink 7 was obtained according to the same procedure as in Example 1.

### COMPARATIVE EXAMPLE 4

An aqueous solution of copolymer 8 (Mw: 8,500) was obtained according to the same procedure as in Example 1, except for using 80 g of succinic acid 2-methacryloyloxyethyl methacrylate in place of macromonomer 1 used in the synthesis of the copolymer in Example 1. Aqueous ink 8 was obtained in the same manner as in Example 1, except for changing the neutralization base in the carboxyl group from potassium hydroxide to triethanolamine.

### Evaluation:

Each of the inks obtained above was evaluated for the following items (a) to (d). The results obtained are shown in Table 1 below.

### (a) Particle size of aqueous ink:

After each of the obtained aqueous ink was diluted 100 times by the addition of water, the particle size of the aqueous ink was measured with "Microtrack UPA250", (manufactured by Nikkiso Co., Ltd.).

### (b) Dispersion stability of aqueous dispersion:

After each of the obtained aqueous ink was left on standing in a closed state at 60°C for 6 months, the aqueous ink was evaluated as failure "×" or good "o" whether the agglomeration of pigment particles and thickening occurred or did not occur, respectively.

### (c) Print density:

Solid-print was performed on PPC recycled paper (manufactured by Nihon Kako Seishi) with Micro-Bubble-Jet Printer (Model BJ-10VL, manufactured by Canon Inc.). Then, optical density of the print after natural seasoning at room temperature for 24 hours was measured with Macbeth densitometer RD918 (manufactured by Macbeth).
Micro-Bubble-Jet Printer is a registered trademark of Canon Inc.

### (d) Picture quality characteristics:

With regard to the occurrence of uneven image density and white lines at black solid image printing, no occurrence was graded "o", slight observation graded "Δ", and obvious occurrence as "x".

**TABLE 1**

| | Volume Average Particle Size (nm) | Dispersion Stability | Print Density | Picture Quality Characteristics |
|---|---|---|---|---|
| Example 1 | 100 | ○ | 1.40 | ○ |
| Example 2 | 95 | ○ | 1.41 | ○ |
| Example 3 | 97 | ○ | 1.39 | ○ |
| Example 4 | 110 | ○ | 1.39 | ○ |
| Comparative Example 1 | 98 | × | 1.18 | ○ |
| Comparative Example 2 | - | - | - | - |
| Comparative Example 3 | 190 | × | 1.09 | × |
| Comparative Example 4 | 150 | × | 1.11 | × |

As shown in Table 1, satisfactory results were obtained with the aqueous inks in the Examples as compared with those in the Comparative Examples. It is presumably due to the fact that the dispersion stability of the dispersant (graft copolymer) used in each Example is excellent as compared with those in the Comparative Examples. The dispersant itself could not be soluble in Comparative Example 2, so that evaluation was impossible.

### Industrial Applicability

The aqueous inks in the invention exhibit no agglomeration of the pigment that is a dispersoid and increase in viscosity of the inks even when left on standing for a long period of time, and show high picture density of printed articles, and are excellent in picture quality characteristics, so that the aqueous inks in the invention are extremely useful for inkjet recording.

## Claims

1. Aqueous ink comprising, as a dispersant, a graft copolymer having a weight average molecular weight of from 1,000 to 100,000 and comprising: a polymer having a weight average molecular weight of from 300 to 10, 000 represented by the following formula (1) as a side chain; and a polymer as a main chain comprising a hydrophobic monomer unit as an essential component, and, if necessary, other copolymerizable monomer unit as a constitutional component: 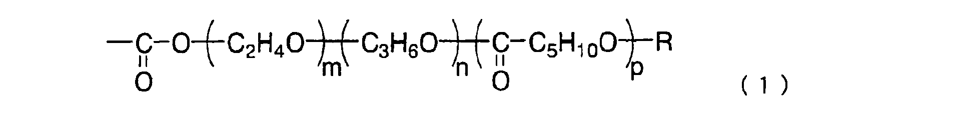 wherein the sum of m and n is 1 or more, p is 0 or 1 or more, and R is a chemical structural unit having an ionic functional group.

2. The aqueous ink as claimed in claim 1, wherein the ionic functional group represented by R in formula (1) is a carboxyl group, a sulfonic acid group, a phosphoric acid group, a primary amino group, a secondary amino group, a tertiary amino group, or a quaternary ammonium salt group.

3. Aqueous ink comprising, as a dispersant, a graft copolymer having a weight average molecular weight of from 1,000 to 100,000 and comprising: a polymer having a weight average molecular weight of from 300 to 10, 000 represented by the following formula (1) as a side chain; and a polymer as a main chain comprising a hydrophobic monomer unit as an essential component, and, if necessary, other copolymerizable monomer unit as a constitutional component, 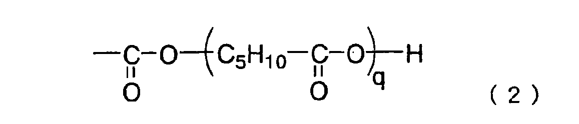 wherein q is 1 or more.

4. The aqueous ink as claimed in any of claims 1 to 3, wherein the side chain in the graft copolymer is formed of a macromonomer.
